# EUROPÄISCHE PATENTSCHRIFT

(11) **EP 2 653 524 B1**
(45) Veröffentlichungstag und Bekanntmachung des Hinweises auf die Patenterteilung: **19.11.2014**
(21) Anmeldenummer: 13001729.6
(22) Anmeldetag: 04.04.2013
(51) Int. Cl.: B29C 70/46, B29C 51/00, B29C 51/08, C10G 9/38, C10G 9/20, C10G 9/36, F28D 21/00, B29C 43/36

(54) **Konvektionszone eines Spaltofens**
Zone de convection d'un four de craquage
Convection zone of a cracking furnace

(30) Priorität: 17.04.2012 DE 102012008038; 02.08.2012 EP 12005619
(43) Veröffentlichungstag der Anmeldung: 23.10.2013
(73) Patentinhaber: Linde Aktiengesellschaft, 80331 München (DE)
(72) Erfinder: Glomb, Stefan, 81377 München (DE); Schmidt, Gunther, 82041 Deisenhofen (DE); Stegemann, Robert, 81543 München (DE)

(56) Entgegenhaltungen:
- EP-A1- 0 245 839
- EP-A1- 0 499 897
- EP-A1- 1 683 850
- DE-A1- 2 830 824
- US-A- 4 361 478
- US-A1- 2008 207 974
- US-A1- 2009 301 935

## Beschreibung

Die Erfindung betrifft ein Verfahren zur Herstellung von Kohlenwasserstoffen mittels thermischer Spaltung eines kohlenwasserstoffhaltigen Einsatzes in einem Spaltofen,
- wobei der Spaltofen eine Strahlungszone und eine Konvektionszone aufweist,
- wobei die thermische Spaltung des kohlenwasserstoffhaltigen Einsatzes in der Strahlungszone erfolgt und
- das Rauchgas der Strahlungszone in der Konvektionszone als Wärmeträger zur Vorwärmung verschiedener Einsatzstoffe genutzt wird,
- der kohlenwasserstoffhaltige Einsatz über in der Konvektionszone angeordneten Wärmetauscher vorgewärmt und/oder verdampft wird, und
- Kesselspeisewasser über mindestens einen in der Konvektionszone angeordneten Wärmetauscher vorgewärmt und/oder verdampft wird,
sowie eine derartige Anlage zur Herstellung von Kohlenwasserstoffen.

Zur Herstellung von Kohlenwasserstoffen mittels thermischer Spaltung (Pyrolyse) werden die längerkettigen Kohlenwasserstoffe des kohlenwasserstoffhaltigen Einsatzstoffes thermisch in kürzerkettige Kohlenwasserstoffprodukte aufgespalten. Dazu wird der kohlenwasserstoffhaltige Einsatz in der Konvektionszone vorgewärmt und/oder verdampft und zur Spaltung in die Spaltrohre der Strahlungszone eines Spaltofens geführt.

Die Strahlungszone des Spaltofens weist eine Befeuerung durch Brenner auf, die die in der Konvektionszone vorgewärmte Mischung aus kohlenwasserstoffhaltigem Einsatz und Verdünnungsdampf in den Spaltrohren weiter auf Reaktionstemperatur aufheizen. Der Wärmeübergang erfolgt hauptsächlich durch Strahlung, wobei bei Prozesstemperaturen von 500 - 900 °C durch thermische Spaltung ein so genanntes Spaltgas entsteht. Das Spaltgas ist im Wesentlichen ein Gemisch aus unter anderen n-Paraffinen, i-Paraffinen, Olefinen, Diolefinen, Azetylen, Naphthenen, Aromaten, Methan, Wasserstoff usw..

Bei der Befeuerung der Rohre der Strahlungszone durch die Brenner entsteht ein heißes Rauchgas. Dieses wird über die Konvektionszone aus dem Spaltofen in die Atmosphäre entlassen. Dabei wird das heiße Rauchgas als Wärmeträger in der Konvektionszone genutzt. Die Konvektionszone einer derartigen Anlage weist daher mindestens einen Wärmetauscher zur Vorwärmung und/oder Verdampfung des kohlenwasserstoffhaltigen Einsatzes, und zumeist mindestens einen Wärmetauscher zur Überhitzung von Verdünnungsdampf sowie mindestens einen Wärmetauscher zur Vorwärmung und/oder Verdampfung von Kesselspeisewasser auf. Bei guter Ausnutzung der thermischen Energie des Rauchgases verlässt das Rauchgas die Konvektionszone mit einer Temperatur von weniger als 150 °C.

Der kohlenwasserstoffhaltige Einsatz, welcher im Spaltofen thermisch in kürzerkettige Kohlenwasserstoffe gespalten wird, steht dabei im Wesentlichen in zwei Aggregatzuständen und damit typischerweise einhergehenden Zusammensetzungen zur Verfügung. Dies können beispielsweise gasförmige Einsätze wie hauptsächlich Ethan, Propan oder flüssige Einsätze wie hauptsächlich Naphtha, Kerosin oder Diesel sein.

Für die Spaltung, d.h. vor dem Eintritt in die Spaltrohre der Strahlungszone, muss der jeweilige kohlenwasserstoffhaltige Einsatz mit Verdünnungsdampf vermischt werden und das Gemisch in der gasförmigen Phase vorliegen. Somit ergeben sich für die unterschiedlichen Aggregatzustände des kohlenwasserstoffhaltigen Einsatzes unterschiedliche Anforderungen an die Konvektionszone. Bei einem gasförmigen kohlenwasserstoffhaltigen Einsatz muss dieser lediglich in der Konvektionszone vorgewärmt werden. Um einen flüssigen kohlenwasserstoffhaltigen Einsatz zu verarbeiten, muss in der Konvektionszone hinreichend Wärmeaustauschfläche zur Verfügung stehen, um den kohlenwasserstoffhaltigen Einsatz nicht nur vorzuwärmen, sondern auch in den gasförmigen Aggregatszustand zu überführen.

Daher wird gemäß dem Stand der Technik das Design der Konvektionszone eines Spaltofens, insbesondere die zu installierenden Wärmetauscher und die damit einhergehende Wärmeaustauschfläche sowie die Anordnung der zu durchströmenden Bündel in der Konvektionszone, auf den jeweiligen kohlenwasserstoffhaltigen Einsatz und seinen Aggregatzustand angepasst. Dabei werden die Austrittstemperatur des Rauchgases und somit der thermische Gesamtwirkungsgrad des Spaltofens sowie die Eintrittstemperatur des Gemisches aus kohlenwasserstoffhaltigen Einsatz und Verdünnungsdampf in die Strahlungszone individuell optimiert.

Da bei einem gasförmigen kohlenwasserstoffhaltigen Einsatz dieser nur vorgewärmt werden muss, steht in diesem Anwendungsfall wesentlich mehr Wärmemenge des Rauchgases für andere Aufgaben zur Verfügung. Daher sind in der Konvektionszone eines Spaltofens, wie er für einen gasförmigen kohlenwasserstoffhaltigen Einsatz ausgelegt ist, zusätzlich noch eine Vielzahl von Wärmetauschern oder eine größere Wärmeaustauschfläche angeordnet, die der Erwärmung und/oder Verdampfung von Kesselspeisewasser und/oder der Erzeugung von überhitztem Hochdruckdampf dienen.

Bei einem flüssigen kohlenwasserstoffhaltigen Einsatz wird mehr Wärmeenergie zur Erwärmung und Verdampfung des Einsatzes benötigt. Daher weist die Konvektionszone eines Spaltofens, wie er für einen flüssigen kohlenwasserstoffhaltigen Einsatz ausgelegt ist, deutlich weniger Wärmetauscher oder Wärmeaustauschfläche zur Erwärmung und/oder Verdampfung von Kesselspeisewasser und/oder der Erzeugung von überhitzte Hochdruckdampf auf.

Diese jeweiligen Designunterschiede in den Spaltöfen für unterschiedliche Arten und Aggregatzustände des kohlenwasserstoffhaltigen Einsatzes führen bei Betrieb eines Spaltofens mit identischer Prozessführung in der Konvektionszone für unterschiedliche Kohlenwasserstoffeinsätze zu Kompromissen hinsichtlich Energieeffizenz und gewünschten verfahrenstechnischen Betriebsbedingungen, so dass der Betrieb des Spaltofens nicht für jeden Kohlenwasserstoffeinsatz wirtschaftlich optimiert ist.

Ein Spaltofen, der primär für einen gasförmigen kohlenwasserstoffhaltigen Einsatz ausgelegt ist, wäre für einen Betrieb mit einem flüssigen kohlenwasserstoffhaltigen Einsatz verfahrenstechnisch nicht optimiert, da dieser in der Konvektionszone nicht hinreichend erwärmt und/oder verdampft werden kann, da die Wärmeaustauschfläche hier typischerweise zu klein konzipiert ist.

Betreibt man dagegen einen Spaltofen, der für einen flüssigen kohlenwasserstoffhaltigen Einsatz ausgelegt wurde, mit einem gasförmigen kohlenwasserstoffhaltigen Einsatz ist dieser Betrieb verfahrenstechnisch nicht optimiert und weniger wirtschaftlich, da nicht annähernd die gesamte thermische Energie des heißen Rauchgases energetisch zurück gewonnen werden kann. In einem derartigen Fall verlässt das Rauchgas die Konvektionszone des Spaltofens mit einer deutlich höheren Temperatur als bei Betrieb mit einem flüssigen kohlenwasserstoffhaltigen Einsatz, so dass die resultierenden Rauchgastemperaturen dann typischerweise größer als 200°C sind.

US4361478, EP0499897, EP1683850 und EP0245839 zeigen jeweils Wärmetauscher zum Erwärmen von Kesselspeisewasser.

Der vorliegenden Erfindung liegt die Aufgabe zugrunde, ein Verfahren bzw. eine Vorrichtung der Eingangs erwähnten Art derartig auszugestalten, dass flexibel auf wechselnde kohlenwasserstoffhaltige Einsätze, insbesondere auf verschiedene Aggregatzustände (gasförmig, flüssig) reagiert werden kann.

Ziel ist ein Verfahren zur Spaltung eines kohlenwasserstoffhaltigen Einsatzes mit optimierten Verfahren zum Betrieb des Spaltofens und entsprechenden Bedingungen (wie beispielsweise Eintrittstemperatur der Mischung aus kohlenwasserstoffhaltigen Einsatz und Verdünnungsdampf in die Strahlungszone) und hohem thermischen Gesamtwirkungsgraden für wechselnde Kohlenwasserstoffeinsätze.

Die vorliegende Aufgabe wird verfahrensseitig durch die Merkmalskombination des Anspruches 1 gelöst. Weitere vorteilhafte Ausgestaltungen der Erfindung sind in den Unteransprüchen angegeben.

Gemäß dem Grundgedanken der Erfindung wird die Verfahrensführung der Ströme in den Wärmetauschern der Konvektionszone derart geregelt, dass
- unabhängig vom Aggregatzustand des kohlenwasserstoffhaltigen Einsatzes die Temperatur des Rauchgases bei Austritt aus der Konvektionszone in einem Bereich von 30°C variiert und kleiner als 150°C ist und die Verfahrensführung der Ströme in den Wärmetauschern in der Konvektionszone derart geregelt ist, dass
- bei gasförmigen kohlenwasserstoffhaltigen Einsatz nahezu 100% der gesamten Wärmeaustauschfläche aller Wärmetauscher in der Konvektionszone am Wärmeaustausch mit dem Rauchgas teilnehmen,
- während bei flüssigen kohlenwasserstoffhaltigen Einsatz nur ein Bruchteil von 100% der Wärmeaustauschfläche der Wärmetauscher in der Konvektionszone am Wärmeaustausch mit dem Rauchgas teilnehmen, die nicht der Vorwärmung und/oder Verdampfung des kohlenwasserstoffhaltigen Einsatzes dienen, und wobei bei flüssigem kohlenwasserstoffhaltigen Einsatz mindestens ein Wärmetauscher (4) zur Erwärmung und/oder Verdampfung von Kesselspeisewasser nicht von Kesselspeisewasser durchströmt wird, insbesondere überbrückt wird oder mittels Bypass-Regelung umgangen wird. welcher bei gasförmigen kohlenwasserstoffhaltigen Einsatz von Kesselspeisewasser durchströmt wird, und wobei der mindestens eine Wärmetauscher (4) mit zumindest einem weiteren, in der Konvektionszone angeordneten Wärmetauscher (5) in Serie strömungstechnisch verbindbar ist, wobei bei flüssigem kohlenwasserstoffhaltigen Einsatz Kesselspeisewasser an dem mindestens einen Wärmeübertrager (4) vorbeigeführt wird und lediglich den mindestens einen weiteren Wärmeübertrager (5) zur Erwärmung und/oder Verdampfung von Kesselspeisewasser durchströmt, und wobei bei einem gasförmigen kohlenwasserstoffhaltigen Einsatz zunächst der mindestens eine Wärmeübertrager (4) und sodann der mindestens eine weitere Wärmeüberträger (5) zur Erwärmung und/oder Verdampfung von Kesselspeisewasser von Kesselspeisewasser durchströmt wird,
- und wobei der Wärmetauscher(3) zur Vorwärmung und/oder Verdampfung des kohlenwasserstoffhaltigen Einsatzes, am kälteren Ende der Konvektionszone angeordnet ist, und wobei die Wärmetauscher (4, 5) zur Erwärmung und/oder Verdampfung von Kesselspeisewasser in einem Bereich höherer Rauchgastemperatur angeordnet sind.

Gemäß dem Erfindungssinne weist die Konvektionszone genügend Wärmetauscher zur Vorwärmung und/oder Verdampfung des kohlenwasserstoffhaltigen Einsatzes, zur Vorwärmung und/oder Verdampfung von Kesselspeisewasser auf. Je nach Aggregatzustand des Kohlenwasserstoffhaltigen Einsatzes nimmt jedoch ein Teil der Wärmeaustauschfläche der Wärmetauscher nicht am Wärmeaustausch teil oder wird in seiner Wirksamkeit eingeschränkt. Dadurch kann zum Einen sichergestellt werden, dass der kohlenwasserstoffhaltige Einsatz unabhängig vom Aggregatzustand im gasförmigen Aggregatzustand mit hinreichend hoher Temperatur in die Strahlungszone eintritt und gleichzeitig die Temperatur des Rauchgases bei Austritt aus der Konvektionszone unabhängig vom Aggregatzustand des kohlenwasserstoffhaltigen Einsatzes um maximal 30 °C schwankt.

Um zu gewährleisten, dass nur ein Bruchteil der Wärmeaustauschfläche aller Wärmetauscher in der Konvektionszone am Wärmeaustausch mit dem Rauchgas beteiligt sind, wird die Verfahrensführung der Ströme in Abhängigkeit vom kohlenwasserstoffhaltigen Einsatz derart geregelt, das bestimmte Teile eines Wärmetauschers oder ein ganzer Wärmetauscher nicht von einem Medium durchströmt wird. Ebenso ist es erfindungsgemäß möglich, die Verfahrensführung der Ströme derart zu regeln, dass der Wirkungsgrad von Wärmetauschern nachlässt. Dies kann beispielsweise durch Gleichstromführung (gleiche Strömungsrichtung von anzuwärmenden und/oder zu verdampfenden Strömen und abzukühlenden Rauchgasstrom) geschehen, so dass die im Wärmetauscher geführten Ströme am kalten Ende des jeweiligen Wärmetauschers eine Temperatur aufweisen, die nahe oder gleich der Temperatur des Rauchgases ist. Alternativ weisen die in den Wärmetauscher geführten Ströme generell eine Temperatur auf, die nahe oder gleich der Temperatur des Rauchgases an der Stelle des Wärmetauschers ist.

Vereinfacht ausgedrückt werden erfindungsgemäß abhängig vom Aggregatzustand des kohlenwasserstoffhaltigen Einsatzes Teile von Wärmetauschern ineffizient, die im anderen Aggregatzustand am Wärmeaustausch mit dem Rauchgas teilnehmen, wobei sich in beiden Fällen die Temperatur des Rauchgases beim Austritt aus der Konvektionszone um maximal 30 °C unterscheidet.

Bevorzugt schwankt die Temperatur des Rauchgases beim Austritt aus der Konvektionszone um maximal 20 °C, besonders bevorzugt um maximal 15 °C.

Bevorzugt weist das Rauchgas bei Austritt aus der Konvektionszone eine Temperatur zwischen 80 °C und 150 °C auf. Dadurch wird ein hoher thermischer Gesamtwirkungsgrad erreicht. Die Verfahrensströme für unterschiedliche Kohlenwasserstoffeinsätze werden zweckmäßigerweise derart geregelt, dass das Rauchgas am Ende der Konvektionszone, d.h. am kalten Ende der Abhitze, eine Temperatur zwischen 80 °C und 150 °C hat, unabhängig von der Art und dem Aggregatzustand des Kohlenwasserstoffhaltigen Einsatzes. Somit wird in allen Fällen die Wärme des Rauchgases optimal ausgenutzt.

Besonders bevorzugt weist das Rauchgas bei Austritt aus der Konvektionszone eine Temperatur zwischen 80 °C und 130 °C auf.

Gemäß der Erfindung wird die Verfahrensführung der Ströme in den Wärmetauschern in der Konvektionszone derart geregelt, dass
- bei gasförmigem kohlenwasserstoffhaltigen Einsatz nahezu 100 % der gesamten Wärmeaustauschfläche aller Wärmetauscher in der Konvektionszone am Wärmeaustausch mit dem Rauchgas teilnehmen,
- während bei flüssigen kohlenwasserstoffhaltigem Einsatz nur ein Bruchteil von 100% der Wärmeaustauschfläche der Wärmetauscher in der Konvektionszone am Wärmeaustausch mit dem Rauchgas teilnehmen, die nicht der Vorwärmung und/oder Verdampfung des Kohlenwasserstoffhaltigen Einsatzes dienen,
- oder der Einsatzstrom von mindestens einem Wärmetauscher in der Konvektionszone, der nicht der Vorwärmung und/oder Verdampfung des Kohlenwasserstoffhaltigen Einsatzes dient, derart geregelt wird, dass der Wirkungsgrad des Wärmeaustausches dieses Wärmetauschers nachlässt,
- wobei insbesondere unabhängig vom Aggregatzustand des Kohlenwasserstoffhaltigen Einsatzes nahezu 100 % der Wärmeaustauschfläche des/der Wärmetauscher/s zur Vorwärmung und/oder Verdampfung des kohlenwasserstoffhaltigen Einsatzes am Wärmeaustausch mit dem Rauchgas teilnehmen und wobei insbesondere
- der/die Wärmetauscher zur Vorwärmung und/oder Verdampfung des kohlenwasserstoffhaltigen Einsatzes am kälteren Ende der Konvektionszone angeordnet sind.

Unter "nahezu 100%" der Wärmeaustauschfläche wird die gesamte Wärmeaustauschfläche verstanden, die bei Auslegung des Wärmetauschers für den entsprechenden Verfahrensstrom vorgesehen war. Werden durch Beschädigungen im Betrieb oder ähnliche Vorkommnisse einzelne Passagen nicht mehr durchströmt und nehmen damit nicht mehr am Wärmeaustausch teil, wird dies im Rahmen der Erfindung immer noch als nahezu 100% der Wärmeaustauschfläche und nicht ein Bruchteil von 100% der Wärmeaustauschfläche verstanden.

Ebenfalls werden im Rahmen der Erfindung das Nachlassen des Wirkungsgrades eines Wärmetauschers und eine kleinere Effizienz des Wärmetauschers als gleichwertig betrachtet.

In dieser Ausgestaltung der Erfindung sind der/die Wärmetauscher zur Vorwärmung und/oder Verdampfung des Kohlenwasserstoffhaltigen Einsatzes am kälteren Ende, bevorzugt am kalten Ende, der Konvektionszone angeordnet. Gemäß der Erfindung werden die Wärmetauscher derart konzipiert, dass bei einem gasförmigen kohlenwasserstoffhaltigen Einsatz die gesamte Wärmeaustauschfläche aller Wärmetauscher in der Konvektionszone am Wärmeaustausch mit dem Rauchgas teilnehmen. Der/die Wärmetauscher zur Erwärmung des kohlenwasserstoffhaltigen Einsatzes entziehen dem Rauchgas den Rest thermische Energie, so dass das Rauchgas auf eine Temperatur von unter 150 °C, bevorzugt auf eine Temperatur zwischen 80 °C und 150 °C, besonders bevorzugt zwischen 80°C und 130°C, abgekühlt wird.

Die Regelung erfolgt dabei bevorzugterweise über Regelventile, Absperrventile oder Druckverlustglieder. Ein Druckverlustglied ist eine beliebige Armatur, die in einer Leitung zu einem hohen Druckverlust führt. Anstelle von Absperrventilen werden also im Rahmen der Erfindung auch zweckmäßigerweise generell andere Armaturen mit hohem Druckverlust im Abfluss verwendet.

Bei einem flüssigen Kohlenwasserstoffhaltigen Einsatz muss in den Wärmetauschern zur Vorwärmung und/oder Verdampfung dem kohlenwasserstoffhaltigen Einsatz mehr Energie zugeführt werden, als bei einem gasförmigen kohlenwasserstoffhaltigen Einsatz. Im Wesentlichen muss dem flüssigen kohlenwasserstoffhaltigen Einsatz zusätzlich noch die Verdampfungsenergie zugeführt werden. Um dies in dem gleichen Wärmetauscher zu gewährleisten, muss die Temperatur des Rauchgases bei einem flüssigen kohlenwasserstoffhaltigen Einsatz vor dem Wärmeaustausch mit dem kohlenwasserstoffhaltigen Einsatz höher sein, als bei einem gasförmigen kohlenwasserstoffhaltigen Einsatz. Dies wird in dieser Ausgestaltung der Erfindung dadurch gewährleistet, dass nur ein Bruchteil von 100 % der Wärmetauscher, die nicht der Vorwärmung und/oder Verdampfung des Kohlenwasserstoffhaltigen Einsatzes dienen, am Wärmeaustausch mit dem Rauchgas teilnehmen oder der Einsatzstrom von mindestens einem Wärmetauscher in der Konvektionszone, der nicht der Vorwärmung und/oder Verdampfung des Kohlenwasserstoffhaltigen Einsatzes dient, derart geregelt wird, dass der Wirkungsgrad des Wärmeaustausches dieses Wärmetauschers nachlässt.

Dem Rauchgas wird vor dem Wärmeaustausch mit dem Kohlenwasserstoffhaltigen Einsatz jeweils nur soviel Wärme entzogen, dass in jedem Fall genug Wärme zur Verfügung steht, um den kohlenwasserstoffhaltigen Einsatz für die Spaltreaktion hinreichend vorzuwärmen und/oder zu verdampfen.

Vereinfacht ausgedrückt lässt sich sagen, dass ein großer Anteil des Wärmeaustausches mit dem kohlenwasserstoffhaltigen Einsatz am kälteren Ende der Konvektionszone erfolgt, und dem Rauchgas vorher in Abhängigkeit vom Aggregatzustand des Kohlenwasserstoffhaltigen Einsatzes nur soviel Wärme entzogen wird, das gerade genug Restwärme im Rauchgas verbleibt, um den kohlenwasserstoffhaltigen Einsatz abhängig vom Aggregatzustand zu erwärmen und/oder zu verdampfen. Zweckmäßigerweise wird der Anteil des Wärmeaustausches mit dem kohlenwasserstoffhaltigen Einsatz am kälteren Ende der Konvektionszone individuell verändert oder angepasst.

Es wird bei flüssigem kohlenwasserstoffhaltigen Einsatz mindestens ein Wärmetauscher zur Erwärmung und/oder Verdampfung von Kesselspeisewasser nicht von Kesselspeisewasser durchströmt, insbesondere überbrückt bzw. mittels Bypass-Regelung umgangen, welcher bei gasförmigen kohlenwasserstoffhaltigen Einsatz von Kesselspeisewasser durchströmt wird. Somit steht eine vorgegebene Zahl von Wärmetauschern zur Vorwärmung und/oder Verdampfung von Kesselspeisewasser zur Verfügung. Ist der kohlenwasserstoffhaltige Einsatz gasförmig, nehmen alle diese Wärmetauscher am Wärmeaustausch mit dem Rauchgas teil. Bei flüssigem kohlenwasserstoffhaltigen Einsatz wird mindestens einer dieser Wärmetauscher zur Vorwärmung und/oder Verdampfung von Kesselspeisewasser nicht von Kesselspeisewasser durchströmt, sondern bevorzugt mittels Bypass-Regelung umgangen. Dieser Wärmetauscher nimmt daher nicht am Wärmeaustausch mit dem Rauchgas teil. Dadurch erhöht sich automatisch die Temperatur des Rauchgases am kälteren Ende der Abhitze vor dem Wärmeaustausch mit dem kohlenwasserstoffhaltigen Einsatz. Das Rauchgas besitzt somit genug thermische Energie, um den flüssigen kohlenwasserstoffhaltigen Einsatz vorzuwärmen und zu verdampfen.

Mit einer Bypass-Regelung ist im Rahmen der Erfindung ein Bypass des/der betreffenden Wärmetauscher/s gemeint. Bevorzugt werden Bypässe im Rahmen der Anmeldung über Ventile realisiert.

Insbesondere ist vorgesehen, dass der mindestens eine Wärmetauscher mit zumindest einem weiteren, in der Konvektionszone angeordneten Wärmetauscher in Serie strömungstechnisch verbindbar ist, wobei bei flüssigem kohlenwasserstoffhaltigen Einsatz Kesselspeisewasser an dem mindestens einen Wärmeübertrager vorbeigeführt wird und lediglich den mindestens einen weiteren Wärmeübertrager zur Erwärmung und/oder Verdampfung von Kesselspeisewasser durchströmt, und wobei bei einem gasförmigen kohlenwasserstoffhaltigen Einsatz zunächst der mindestens eine Wärmeübertrager und sodann der mindestens eine weitere Wärmeübertrager zur Erwärmung und/oder Verdampfung von Kesselspeisewasser von Kesselspeisewasser durchströmt wird.

In einer weiteren Ausgestaltung der Erfindung wird Verdünnungsdampf für die Spaltung über mindestens einen in der Konvektionszone angeordneten Wärmetauscher überhitzt, wobei dieser Wärmetauscher mittels einer Bypassregelung abhängig vom Aggregatzustand des kohlenwasserstoffhaltigen Einsatzes nicht oder mit geringerem Wirkungsgrad am Wärmeaustausch mit dem Rauchgas beteiligt ist. Diese Ausgestaltung ist eine alternative Ausführungsform des der soeben geschilderten Ausführungsform der Erfindung.

Gemäß einer Ausgestaltung der Erfindung wird die Verfahrensführung der Ströme in den Wärmetauschern in der Konvektionszone derart geregelt, dass
- bei flüssigem kohlenwasserstoffhaltigen Einsatz nahezu 100% der gesamten Wärmeaustauschfläche des/der Wärmetauscher zur Vorwärmung und/oder Verdampfung des kohlenwasserstoffhaltigen Einsatzes am Wärmeaustausch mit dem Rauchgas teilnehmen,
- während bei gasförmigem Einsatz nur ein Bruchteil von 100% der gesamten Wärmeaustauschfläche des/der Wärmeaustauscher/s zur Vorwärmung und/oder Verdampfung des kohlenwasserstoffhaltigen Einsatzes am Wärmeaustausch mit dem Rauchgas teilnehmen,
- oder der kohlenwasserstoffhaltige Einsatz von mindestens einem Wärmetauscher in der Konvektionszone, der der Vorwärmung und/oder Verdampfung des Kohlenwasserstoffhaltigen Einsatzes dient, derart geregelt wird, dass der Wirkungsgrad des Wärmeaustausches dieses Wärmeaustauschers nachlässt,
- wobei unabhängig vom Aggregatzustand des kohlenwasserstoffhaltigen Einsatzes nahezu 100% der gesamten Wärmeaustauschfläche aller übrigen Wärmetauscher der Konvektionszone am Wärmeaustausch teilnehmen, und
- wobei mindestens ein Wärmetauscher zur Vorwärmung und/oder Verdampfung des kohlenwasserstoffhaltigen Einsatzes am kälteren Ende der Konvektionszone und mindestens ein Wärmetauscher zur Vorwärmung und/oder Verdampfung des kohlenwasserstoffhaltigen Einsatzes in einen Bereich höherer Rauchgastemperatur angeordnet ist.

Der eine Wärmetauscher zur Vorwärmung und/oder Verdampfung des kohlenwasserstoffhaltigen Einsatzes am kälteren Ende der Konvektionszone kann dabei zweckmäßigerweise direkt am kalten Ende der Konvektionszone oder beispielsweise am kälteren Ende unterhalb des/der Wärmetauscher/s zur Anwärmung von Kesselspeisewasser angeordnet sein.

Es stehen dazu mindestens zwei Wärmetauscher zur Vorwärmung und/oder Verdampfung des kohlenwasserstoffhaltigen Einsatzes zur Verfügung. Dabei sind mindestens einer dieser Wärmetauscher am kälteren Ende der Konvektionszone und mindestens ein anderer dieser Wärmetauscher in einem Bereich höherer Rauchgastemperatur angeordnet.

Bei einem flüssigen kohlenwasserstoffhaltigen Einsatz nehmen in dieser Ausgestaltung der Erfindung nahezu 100% der gesamten Wärmeaustauschfläche der Wärmetauscher zur Vorwärmung und/oder Verdampfung des kohlenwasserstoffhaltigen Einsatzes am Wärmeaustausch mit dem Rauchgas teil. Da bei einem gasförmigen kohlenwasserstoffhaltigen Einsatz nicht soviel Wärme zur Erwärmung des Kohlenwasserstoffhaltigen Einsatzes notwendig ist, wird in dieser Ausgestaltung entweder die durchströmte Wärmeaustauschfläche hierfür reduziert oder die Verfahrensströme werden derart geführt, dass der Wirkungsgrad eines dieser Wärmeaustauscher zur Vorwärmung und/oder Verdampfung des kohlenwasserstoffhaltigen Einsatzes in seinem Wirkungsgrad verringert wird. Somit werden auch in dieser Ausgestaltung der Erfindung die Verfahrensströme derart geführt, dass sich unabhängig vom Aggregatzustand des kohlenwasserstoffhaltigen Einsatzes eine nur im Bereich von 30 °C variierende Austrittstemperatur des Rauchgases aus der Konvektionszone ergibt, die unterhalb von 150°C, bevorzugt im Bereich zwischen 80°C und 150 °C, besonders bevorzug zwischen 80°C und 130°C liegt.

Bevorzugt wird in dieser Ausgestaltung der Erfindung
- bei gasförmigem kohlenwasserstoffhaltigen Einsatz dieser zuerst einem Wärmetauscher zur Vorwärmung und/oder Verdampfung des Kohlenwasserstoffhaltigen Einsatzes am kälteren Ende der Konvektionszone zugeführt,
- wobei mindestens einer der Wärmetauscher zur Vorwärmung und/oder Verdampfung des Kohlenwasserstoffhaltigen Einsatzes in den Bereich der höheren Rauchgastemperatur nicht von kohlenwasserstoffhaltigem Einsatz durchströmt wird,
- während bei flüssigem kohlenwasserstoffhaltigen Einsatz dieser zuerst mindestens einem Wärmetauscher zur Vorwärmung und/oder Verdampfung des Kohlenwasserstoffhaltigen Einsatz in dem Bereich der höheren Rauchgastemperatur zugeführt wird, bevor der kohlenwasserstoffhaltige Einsatz den/die Wärmetauscher zur Vorwärmung und/oder Verdampfung des kohlenwasserstoffhaltigen Einsatzes am kälteren Ende der Konvektionszone passiert, und
- wobei die Regelung bevorzugt über Absperrventile in den Zuführungen des Kohlenwasserstoffhaltigen Einsatzes erfolgt.

Dazu sind mindestens zwei Wärmetauscher zur Vorwärmung und/oder Verdampfung des kohlenwasserstoffhaltigen Einsatzes in der Konvektionszone angeordnet. Einer dieser beiden Wärmetauscher befindet sich am kälteren Ende der Konvektionszone, während mindestens ein anderer dieser Wärmetauscher in einem Bereich höherer Rauchgastemperatur angeordnet ist.

Bei einem gasförmigen kohlenwasserstoffhaltigen Einsatz wird dieser mindestens einem Wärmetauscher zugeführt, welcher der Vorwärmung und/oder Verdampfung des kohlenwasserstoffhaltigen Einsatz dient und im Bereich des oberen Endes, d.h. am kälteren Ende, der Konvektionszone angeordnet ist. Mindestens einer der Wärmetauscher zur Vorwärmung und/oder Anwärmung des kohlenwasserstoffhaltigen Einsatzes, der in einem Bereich höherer Rauchgastemperatur angeordnet ist, wird bei gasförmigem kohlenwasserstoffhaltigen Einsatz nicht von diesem durchströmt. Somit nimmt dieser nicht am Wärmeaustausch mit dem Rauchgas teil. Dadurch wird gewährleistet, dass bei gasförmigem kohlenwasserstoffhaltigen Einsatz nur ein Bruchteil von 100% der gesamten Wärmeaustauschfläche der Wärmetauscher zur Vorwärmung und/oder Verdampfung des kohlenwasserstoffhaltigen Einsatzes am Wärmeaustausch mit dem Rauchgas teilnehmen.

Flüssiger kohlenwasserstoffhaltiger Einsatz wird gemäß dieser bevorzugten Ausgestaltung der Erfindung zuerst in mindestens einem der Wärmetauscher zur Vorwärmung und/oder Verdampfung des kohlenwasserstoffhaltigen Einsatzes geführt, der in einem Bereich höherer Rauchgastemperatur angeordnet ist. Nach Passieren dieses oder dieser Wärmetauscher wird der kohlenwasserstoffhaltige Einsatz in mindestens einem Wärmetauscher zur Vorwärmung und/oder Verdampfung des kohlenwasserstoffhaltigen Einsatzes geführt, der am kälteren Ende der Konvektionszone angeordnet ist. Dadurch nehmen bei flüssigem kohlenwasserstoffhaltigen Einsatz nahezu 100 % der Wärmeaustauschfläche der Wärmetauscher zur Vorwärmung und/oder Verdampfung des kohlenwasserstoffhaltigen Einsatzes am Wärmeaustausch mit dem Rauchgas teil und der flüssige kohlenwasserstoffhaltige Einsatz wird sowohl verdampft als auch hinreichend vorgewärmt. Das Umschalten zwischen diesen beiden Betriebszuständen mit unterschiedlichen kohlenwasserstoffhaltigen Einsätzen erfolgt hierbei bevorzugt über Regel- bzw. Absperrventile, die in den Zuführungen des kohlenwasserstoffhaltigen Einsatzes zu den Wärmetauschern zur Vorwärmung und/oder Verdampfung des kohlenwasserstoffhaltigen Einsatzes angeordnet sind.

Gemäß einer bevorzugten Ausführungsform dieser Ausgestaltung wird
- der kohlenwasserstoffhaltigen Einsatz unabhängig vom Aggregatzustand zuerst in mindestens einem Wärmetauscher zur Vorwärmung und/oder Verdampfung des kohlenwasserstoffhaltigen Einsatzes am kälteren Ende der Konvektionszone geführt,
- wobei bei gasförmigem kohlenwasserstoffhaltigen Einsatz mindestens ein Wärmetauscher zur Vorwärmung und/oder Verdampfung des Kohlenwasserstoffhaltigen Einsatzes in den Bereich der höheren Rauchgastemperatur nicht durchströmt wird, insbesondere mittels Bypass-Regelung und Absperrventilen umgangen wird,
- welcher bei flüssigem kohlenwasserstoffhaltigen Einsatz von diesem durchströmt wird.

Auch in dieser Ausführungsform der Ausgestaltung nimmt bei gasförmigen kohlenwasserstoffhaltigen Einsatz nur ein Bruchteil von 100 % der Wärmeaustauschfläche aller Wärmetauscher zur Vorwärmung und/oder Verdampfung des kohlenwasserstoffhaltigen Einsatzes am Wärmeaustausch mit dem Rauchgas teil. Bei flüssigem kohlenwasserstoffhaltigen Einsatz wird nahezu die gesamte Wärmeaustauschfläche der Wärmetauscher zur Vorwärmung und/oder Verdampfung des kohlenwasserstoffhaltigen Einsatzes genutzt. Speziell wird mittels Bypass-Regelung und Absperrventilen mindestens ein Wärmetauscher in den Bereich höherer Rauchgastemperatur bei gasförmigen kohlenwasserstoffhaltigen Einsatz umgangen. Bei flüssigem kohlenwasserstoffhaltigen Einsatz passiert dieser erst die Wärmetauscher am kälteren Ende der Konvektionszone und wird von dort in die Wärmetauscher im Bereich höherer Rauchgastemperatur geführt.

Vorteilhafterweise wird der kohlenwasserstoffhaltige Einsatz und/oder das Kesselspeisewasser einheitlich vorgewärmt und/oder verdampft. Bevorzugt werden somit an der Gesamtmenge des kohlenwasserstoffhaltigen Einsatzes die gleichen Schritte zum Vorwärmen und/oder Verdampfen des kohlenwasserstoffhaltigen Einsatzes durchgeführt. Es ist jedoch auch möglich, die Gesamtmenge an kohlenwasserstoffhaltigem Einsatz in zwei oder mehr Teilströme aufzuteilen und nur an einem der Teilströme eine Vorwärmung und/oder Verdampfung gemäß der Erfindung durchzuführen. Bevorzugt werden auch an der Gesamtmenge des Kesselspeisewassers die gleichen Schritte zum Vorwärmen und/oder Verdampfen des Kesselspeisewassers durchgeführt. Auch die Gesamtmenge an Kesselspeisewasser kann in anderen Fällen in zwei oder mehr Teilströme aufgeteilt werden, wobei an einem der Kesselwasserteilströme eine Vorwärmung und/oder Verdampfung gemäß der Erfindung durchgeführt wird.

Eine Anlage zur Herstellung von Kohlenwasserstoffen mittels thermischer Spaltung eines kohlenwasserstoffhaltigen Einsatzes mit einem Spaltofen, welche zur Durchführung des erfindungsgemäßen Verfahrens geeignet ist, weist insbesondere folgeende Bestandteile auf:
- wobei der Spaltofen eine Strahlungszone und eine Konvektionszone aufweist,
- wobei die Strahlungszone mindestens ein Spaltrohr geeignet zur Spaltung des kohlenwasserstoffhaltigen Einsatzes aufweist,
- die Strahlungszone eine Feuerung zur Beheizung aufweist, wobei Rauchgas entsteht,
- die Strahlungszone einer Strömungsverbindung für das Rauchgas zur Konvektionszone aufweist,
- die Konvektionszone mindestens ein Wärmetauscher aufweist, der eine Zuführung für den kohlenwasserstoffhaltigen Einsatz und eine Strömungsverbindung zu mindestens einem Spaltrohr in der Strahlungszone aufweist,
- die Konvektionszone mindestens einen Wärmetauscher aufweist, der eine Zuführung von Kesselspeisewasser aufweist,
- und mindestens eine Zuführung von einem Wärmetauscher ein Regelventil und/oder Absperrventil aufweist.

Die Anlage weist mindestens eine Zuführung zu mindestens einem Wärmetauscher ein Regelventil oder Absperrventil auf. Dadurch kann sichergestellt werden, dass in Abhängigkeit vom Aggregatzustand des kohlenwasserstoffhaltigen Einsatzes ein Teil der Wärmeaustauschfläche nicht am Wärmeaustausch teilnimmt oder der Wirkungsgrad von mindestens einem Wärmetauscher verschlechtert wird.

Die Anlage weist die Zufuhr von mindestens einem Wärmetauscher zur Erwärmung von Kesselspeisewasser ein Absperrventil und die Zu- oder Abführung von mindestens einem anderen Wärmetauscher zur Erwärmung von Kesselspeisewasser ein Absperrventil oder ein Druckverlustglied (siehe oben) auf. Es stehen mindestens zwei Wärmetauscher zur Erwärmung von Kesselspeisewasser zur Verfügung. Je nach Aggregatzustand des kohlenwasserstoffhaltigen Einsatzes nehmen alle Wärmetauscher oder mindestens einer nicht am Wärmeaustausch mit dem Rauchgas teil.

Weiterhin ist vorgesehen, dass das Absperrventil der Zufuhr des mindestens einen Wärmetauschers eine Kesselspeisewasserzufuhrleitung des mindestens einen Wärmetauschers mit einer Kesselspeisewasserzufuhrleitung des anderen Wärmetauschers verbindet.

Und weiterhin ist vorgesehen, dass die Abführung des mindestens einen anderen Wärmetauschers strömungstechnisch mit der Kesselspeisewasserzufuhrleitung des mindestens einen Wärmetauschers verbunden ist.

Es ist weiterhin vorgesehen, dass bei offenem Absperrventil der besagten Zufuhr und geschlossenem Absperrventil der besagten Zu- oder Abführung der mindestens eine andere Wärmetauscher überbrückt ist und kein Kesselspeisewasser durch den mindestens einen anderen Wärmetauscher führbar ist, während bei geschlossenem Absperrventil der besagten Zufuhr und offenem Absperrventil der besagten Zu- oder Abführung Kesselspeisewasser zum Verdampfen bzw. Erwärmen des Kesselspeisewassers erst durch den mindestens einen anderen Wärmetauscher und dann durch den mindestens einen Wärmetauscher führbar ist. Anstelle des Absperrventils in der besagten Zu- oder Abführung kann ein Druckverlustglied ebenfalls bewirken, dass das Kesselspeisewasser die vorstehend beschriebenen Strömungspfade nimmt. Dies hat den Vorteil, dass bei einem permanent hohen Druckabfall durch das Druckverlustglied das Regeln eines entsprechenden Ventils entfallen kann.

Zweckmäßigerweise weist die Zuführung von kohlenwasserstoffhaltigen Einsatz zu mindestens einem Wärmetauscher ein Absperrventil auf. Dadurch wird gewährleistet, dass je nach Aggregatzustand die gesamte Wärmeaustauschfläche zur Vorwärmung und/oder Verdampfung des kohlenwasserstoffhaltigen Einsatzes oder nur ein Bruchteil hiervon genutzt wird.

Ebenso ist es zweckmäßig, dass die Abführung von kohlenwasserstoffhaltigen Einsatz von mindestens einem Wärmetauscher eine strömungstechnische Verbindung mit mindestens einem weiteren Wärmetauscher und ein Absperrventil aufweist. In dieser Ausgestaltung der Erfindung kann der Kohlenwasserstoffhaltige Einsatz je nach Aggregatzustand mehr oder weniger Wärmetauscher durchströmen.

Mit Hilfe der vorliegenden Erfindung gelingt es insbesondere, ein Verfahren zur Herstellung von Kohlenwasserstoffen derart zu betreiben, dass einerseits die Wärme des Rauchgases in der Konvektionszone optimal genutzt wird und andererseits sichergestellt wird, dass der kohlenwasserstoffhaltige Einsatz in der Konvektionszone unabhängig vom Aggregatzustand hinreichend vorgewärmt und verdampft wird.

Im Folgenden soll die Erfindung anhand der in den Figuren dargestellten Ausführungsbeispielen näher erläutert werden. Es zeigen
- **Figur 1**: ein Verfahrensschema einer Ausgestaltung der Erfindung bei gasförmigem kohlenwasserstoffhaltigen Einsatz
- **Figur 2**: das Verfahrensbeispiel nach Fig. 1 bei flüssigem kohlenwasserstoffhaltigen Einsatz
- **Figur 3**: ein Verfahrensschema einer beispielhaften Ausgestaltung der Erfindung bei gasförmigem kohlenwasserstoffhaltigen Einsatz
- **Figur 4**: die Ausgestaltung aus Fig. 3 bei flüssigem kohlenwasserstoffhaltigen Einsatz
- **Figur 5**: ein Verfahrensschema einer anderen beispielhaften Ausgestaltung der Erfindung bei gasförmigem kohlenwasserstoffhaltigen Einsatz und
- **Figur 6**: das Ausführungsbeispiel gemäß Fig. 5 bei flüssigem kohlenwasserstoffhaltigen Einsatz.

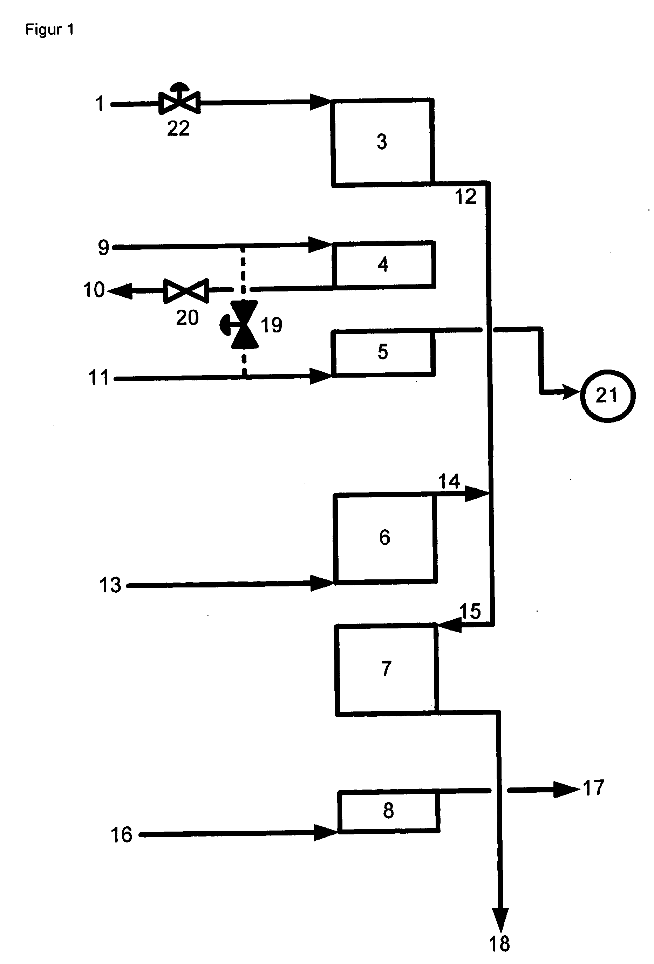

Bei den in den Figuren 1 bis 6 dargestellten Ausführungsbeispielen der Erfindung handelt es sich um Verfahrensschemata, bei denen ein als Viereck dargestellter Wärmetauscher jeweils für einen oder mehrere Wärmetauscher steht, aber als ein Wärmetauscher beschrieben wird. Die schematische Anordnung der Wärmetauscher in den Figuren entspricht dabei der Anordnung in der Konvektionszone. Ein oben in den Figuren angeordneter Wärmetauscher befindet sich am kälteren Ende der Konvektionszone. Darunter angeordnete Wärmetauscher sind in Bereichen mit höherer Rauchgastemperatur. Durchgezogene Linien in den Figuren repräsentieren jeweils benutzte Strömungspfade. Die darin angeordneten Ventile sind entsprechend in der Offenstellung. Gestrichelte Linien in den Figuren repräsentieren nicht durchströmte Strömungspfade, wobei die hier angeordneten Ventile entsprechend in der Geschlossenstellung sind. Gleiche Teile sind in den Figuren jeweils mit gleichen Bezugsziffern gekennzeichnet

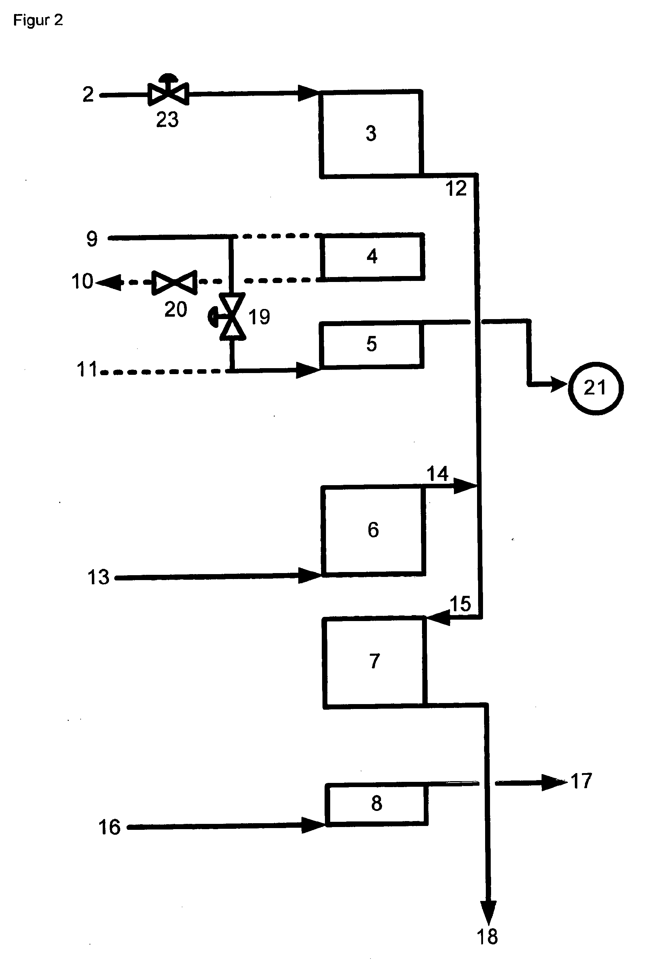

Die Figuren 1 und 2 zeigen eine Ausgestaltung der Erfindung, bei der unabhängig vom Aggregatzustand de Kohlenwasserstoffhaltigen Einsatzes nahezu 100 % der Wärmeaustauschfläche des Wärmetauschers zur Vorwärmung und/oder Verdampfung des Kohlenwasserstoffhaltigen Einsatzes am Wärmeaustausch mit dem Rauchgas teilnehmen.

Bei dem in Fig. 1 dargestellten Verfahrensschema wird der gasförmige kohlenwasserstoffhaltige Einsatz 1 in einem Wärmetauscher 3 geführt, der am kälteren Ende der Konvektionszone angeordnet ist. Der erwärmte kohlenwasserstoffhaltige Einsatz 12 wird vom Wärmetauscher 3 nach Zugabe von überhitzten Dampf 14 über eine Zuführung 15 in einen weiteren Wärmetauscher 7 im Bereich höherer Rauchgastemperatur zur weiteren Vorwärmung bzw. Überhitzung geführt. Das vorgewärmte Gemisch aus Dampf und kohlenwasserstoffhaltigen Einsatz 18 wird über weitere optionale nicht dargestellte Wärmetauscher in die Spaltrohre in der Strahlungszone geführt, wo die eigentliche Spaltungsreaktion stattfindet (nicht dargestellt).

In dieser Ausgestaltung der Erfindung sind unterhalb des ersten Wärmetauschers 3 zur Vorwärmung und/oder Verdampfung des kohlenwasserstoffhaltigen Einsatzes 1 zwei Wärmetauscher 4 und 5 zur Erwärmung und/oder Verdampfung von Speisewasser 9 und 11 sowie ein Wärmetauscher 6 zur Überhitzung von Verdünnungsdampf 13 angeordnet. Das Kesselspeisewasser 9 wird in dem Wärmetauscher 4 geführt und durch den Wärmeaustausch mit dem Rauchgas erwärmt. Das Ventil 20 befindet sich in der Offenstellung. Dadurch wird Wärmetauscher 4 durchströmt und das erwärmte Kesselspeisewasser 10 zur weiteren optionalen Erwärmung (nicht dargestellt) aus der Konvektionszone geführt und anschließend als Kesselspeisewasser 11 in einem weiteren Wärmetauscher 5 vorgewärmt und gegebenenfalls teilweise verdampft und als ein- oder zweiphasiges Gemisch der Dampftrommel 21 außerhalb der Konvektionszone aufgegeben. Das Ventil 19 befindet sich in der Geschlossenstellung, so dass es keine direkte Strömungsverbindung zwischen den beiden Kesselspeisewasserzufuhrleitungen 9 und 11 gibt. Jedoch kann die Abführung 10 strömungstechnisch mit der Kesselspeisewasserzuführung 11 verbunden sein. Anstelle eines Ventils 20 kann auch ein insbesondere nicht einstellbares Druckverlustglied vorgesehen sein, das einen insbesondere permanenten hohen Druckverlust bewirkt. Auch in diesem Fall strömt das Kesselspeisewasser bei geschlossenem Ventil 19 über das Druckverslustglied 20.

Verdünnungsdampf 13 wird im Wärmetauscher 6, der in einem Bereich höherer Rauchgastemperatur angeordnet ist, überhitzt und als Verdünnungsdampf 14 dem kohlenwasserstoffhaltigen Einsatz 12 aufgegeben. Durch das Gemisch 15 aus kohlenwasserstoffhaltigem Einsatz 12 und überhitztem Dampf 14 wird die Effektivität der Spaltreaktion verbessert. Die Konvektionszone kann zusätzlich noch weitere Wärmetauscher 8 für die Erwärmung zusätzlicher Einsatzströme 16 wie beispielsweise gesättigtem Hochdruckdampf aus der Dampftrommel 21 aufweisen. Der gesättigte Hochdruckdampf 16 kann beispielsweise in den Wärmetauschern 8 überhitzt und als Hochdruckdampf 17 in weiteren Anlageteilen verwendet werden.

Fig. 2 zeigt das gleiche Ausführungsbeispiel wie Fig. 1, jedoch wird hier die Verfahrensführung für einen flüssigen kohlenwasserstoffhaltigen Einsatz 2 dargestellt. Im Gegensatz zum gasförmigen kohlenwasserstoffhaltigen Einsatz 1 nimmt nur der Wärmetauscher 5 für das Kesselspeisewasser 9 am Wärmeaustausch mit dem Rauchgas teil. In diesem Ausführungsbeispiel sind das Ventil 20 in der Geschlossenstellung und das Ventil 19 in der Offenstellung. Dadurch durchströmt das Kesselspeisewasser 9 nicht den Wärmetauscher 4 sondern wird direkt als Einsatz 11 dem zweiten Wärmetauscher 5 aufgegeben und dort gegebenenfalls teilweise verdampft. Alternativ kann auch eine Armatur mit hohem Druckverlust, z.B. das besagte Druckverlustglied (siehe oben), anstelle des Ventils 20 eingesetzt werden, so dass das Kesselspeisewasser bei Offenstellung des Ventils 19 aufgrund des geringeren hydraulischen Widerstandes direkt zum Wärmetauscher 5 strömt. Das ein- oder zweiphasige Gemisch wird wieder der Dampftrommel 21 aufgegeben.

Durch die geänderte Verfahrensführung in Fig. 2 im Vergleich zu Fig. 1 wird hier nur ein Bruchteil von 100 % der Wärmeaustauschfläche der Wärmetauscher in der Konvektionszone am Wärmeaustausch mit dem Rauchgas beteiligt, die nicht der Vorwärmung und/oder Verdampfung des kohlenwasserstoffhaltigen Einsatzes dienen. Konkret wird Wärmetauscher 4 nicht durchströmt, wodurch sich die gesamte Wärmeaustauschfläche für die Erwärmung und/oder Verdampfung des Kesselspeisewassers auf einen Bruchteil von 100 % reduziert. Dadurch wird dem Rauchgas nur durch den Wärmetauscher 5 Wärme entzogen. Der Wärmeaustausch zwischen dem flüssigen kohlenwasserstoffhaltigen Einsatz 2 und dem Rauchgas im Wärmetauscher 3 findet dabei mit deutlich höherem Temperaturunterschied statt. Das Rauchgas enthält im Vergleich zur Verfahrensführung bei gasförmigem Kohlenwasserstoffhaltigen Einsatz eine deutlich höhere Wärmemenge. Diese kann dem Rauchgas entzogen werden und gewährleistet, dass dem flüssigen kohlenwasserstoffhaltigen Einsatz 2 genug Wärme zur Vorwärmung und/oder Verdampfung zugeführt wird.

Somit hat das Rauchgas am kälteren Ende der Abhitze bei gasförmigem Kohlenwasserstoffhaltigen Einsatz 1 und bei flüssigem kohlenwasserstoffhaltigen Einsatz 2 eine Temperatur, die innerhalb eines Bereiches von 30 °C schwankt und unter 150°C liegt. Bevorzugt beträgt die Temperatur des Rauchgases hier zwischen 80°C und 130 °C.

Alternativ kann in dem Ausführungsbeispiel der Figuren 1 und 2 das Absperrventil 20 direkt hinter dem Wärmetauscher 4 angeordnet werde und der Bypass mit dem Absperrventil 19 in der Abführung 10 hinter dem Absperrventil 20 enden (nicht dargestellt).

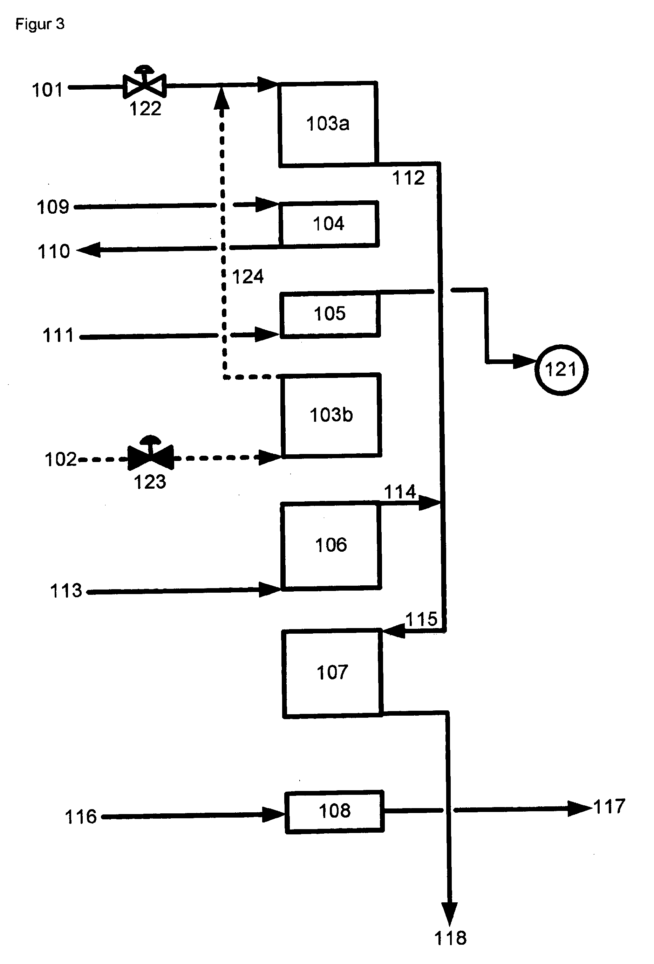

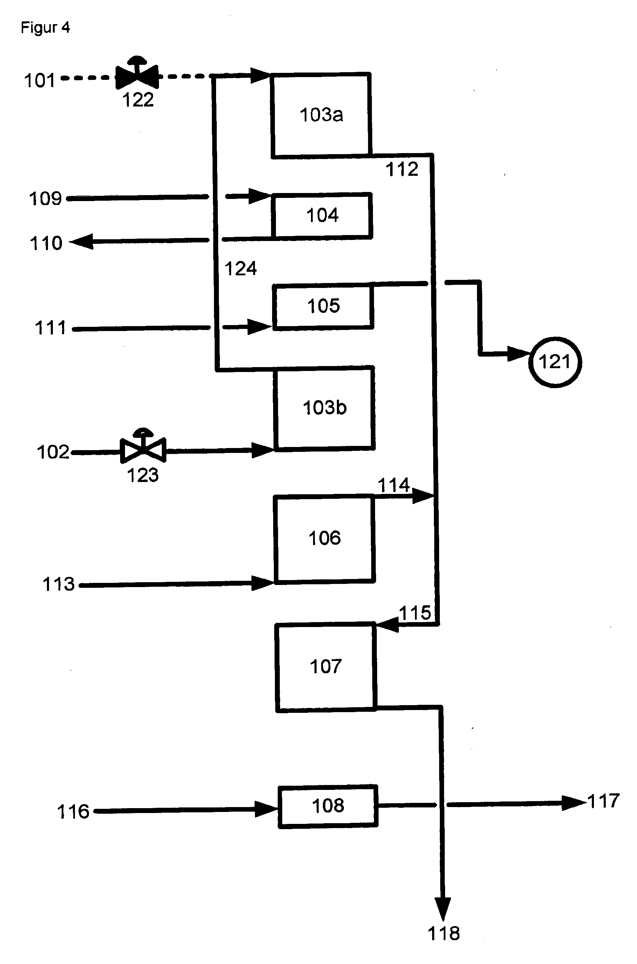

Fig. 3 und Fig. 4 zeigen Ausführungsformen eine Ausgestaltung der Erfindung, bei der unabhängig von Aggregatzustand des kohlenwasserstoffhaltigen Einsatzes nahezu 100 % der Wärmeaustauschfläche aller Wärmeaustauscher am Wärmeaustausch mit dem Rauchgas teilnehmen, die nicht der Vorwärmung und/oder Verdampfung des kohlenwasserstoffhaltigen Einsatzes dienen.

Der gasförmige kohlenwasserstoffhaltige Einsatz 101 wird in den Wärmeaustauscher 103a am kälteren Ende der Konvektionszone zur Vorwärmung und/oder Verdampfung geführt. Das Ventil 122 befindet sich entsprechend in der Offenstellung. Der erwärmte kohlenwasserstoffhaltige Einsatz 112 wird vom Wärmetauscher 103a nach Zufuhr von Verdünnungsdampf 114 in einen weiteren Wärmetauscher 107 zur Vorwärmung bzw. Überhitzung des Gemisches 115 aus kohlenwasserstoffhaltigen Einsatz und Verdünnungsdampf geführt.

Ähnlich der in den Fig. 1 und 2 dargestellten Ausgestaltung weist die Konvektionszone zwei weitere Wärmetauscher 104 und 105 zur Vorwärmung und/oder Verdampfung von Kesselspeisewasser 109 und 111 auf. Im Wärmetauscher 104 wird ähnlich wie in den Fig. 1 und 2 Kesselspeisewasser 109 erwärmt und zu einer weiteren Verwendung 110 geführt. Das Kesselspeisewasser 111 wird im Wärmetauscher 105 weiter erwärmt und gegebenenfalls teilweise verdampft und als ein- oder zweiphasiges Gemisch der Dampftrommel 121 aufgegeben.

Das weiter erwärmte Gemisch 115 aus kohlenwasserstoffhaltigen Einsatz 101 und überhitztem Verdünnungsdampf 114 wird nach weiterer Vorwärmung bzw. Überhitzung im Wärmetauscher 107 zur Spaltungsreaktion in die Spaltrohre 118 geführt.

Ähnlich der vorangegangenen Ausgestaltung weist die Konvektionszone noch weitere zusätzliche Wärmetauscher 108 auf, in dem beispielsweise gesättigter Hochdruckdampf 116 überhitzt und als Hochdruckdampf 117 in anderen Teilen der Anlage verwendet werden kann.

In der Ausgestaltung gemäß Fig. 3 und 4 sind in der Konvektionszone mindestens zwei Wärmetauscher 103a und 103b zur Vorwärmung und/oder Verdampfung des kohlenwasserstoffhaltigen Einsatzes angeordnet. Der Wärmetauscher 103a befindet sich dabei am kälteren Ende der Konvektionszone, während sich der Wärmetauscher 103b in einem Bereich höherer Rauchgastemperatur befindet.

Erfindungsgemäß wird in dieser Ausgestaltung bei gasförmigem Kohlenwasserstoffhaltigen Einsatz 101 der Wärmetauscher 103b nicht durchströmt. Das Ventil 123 befindet sich entsprechend in der Geschlossenstellung. Somit nimmt in dieser Ausgestaltung der Erfindung nur ein Bruchteil von 100 % der Wärmeaustauschfläche der Wärmetauscher am Wärmeaustausch mit dem Rauchgas teil, die zur Vorwärmung und/oder Verdampfung des kohlenwasserstoffhaltigen Einsatz dienen.

Fig. 4 zeigt die Verfahrensführung der Ausgestaltung nach Fig. 3 bei flüssigen kohlenwasserstoffhaltigen Einsatz 102. In diesem Fall wird der flüssige kohlenwasserstoffhaltige Einsatz 102 in den Wärmetauscher 103b im Bereich der höheren Rauchgastemperatur geführt. Das Ventil 123 befindet sich entsprechend in der Offenstellung, während das Regelventil 122 in der Geschlossenstellung ist. Nach der Vorwärmung im Wärmetauscher 103b wird der vorgewärmte flüssige kohlenwasserstoffhaltige Einsatz 124 in den Wärmetauscher 103a am kälteren Ende der Konvektionszone zur weiteren Vorwärmung geführt. Der so vorgewärmte flüssige kohlenwasserstoffhaltige Einsatz 112 wird unter Zugabe von überhitztem Verdünnungsdampf 114 als Einsatz 115 in den Wärmetauscher 107 zur weiteren Vorwärmung bzw. Überhitzung geführt.

In dieser Ausgestaltung der Erfindung werden die Verfahrenströme so geführt, dass bei flüssigen kohlenwasserstoffhaltigem Einsatz 102 nahezu 100 % der Wärmeaustauschfläche der Wärmetauscher 103a und 103b zur Vorwärmung und/oder Verdampfung des kohlenwasserstoffhaltigen Einsatzes genutzt werden. Der flüssige Kohlenwasserstoffhaltige Einsatz 102 wird dabei als erstes in den Wärmetauscher 103b geführt, der sich an einer Position mit höherer Rauchgastemperatur als der Wärmetauscher 103a in der Konvektionszone befindet. Durch die Ausnutzung von nahezu 100% der Wärmeaustauschfläche der Wärmetauscher zur Vorwärmung und/oder Verdampfung wird gewährleistet, dass auch in diesem Fall dem flüssigen kohlenwasserstoffhaltigen Einsatz 102 genug Wärme zur Vorwärmung und/oder Verdampfung zugeführt wird.

In dieser in den Figuren 3 und 4 dargestellten Ausgestaltung der Erfindung für die gesamte Wärmeaustauschfläche aller Wärmetauscher, die nicht der Vorwärmung und/oder Verdampfung des Kohlenwasserstoffhaltigen Einsatz dienen, unabhängig vom Aggregatzustand des Kohlenwasserstoffhaltigen Einsatzes genutzt. Insbesondere nehmen unabhängig vom Aggregatzustand des kohlenwasserstoffhaltigen Einsatzes die beiden Wärmetauscher 104 und 105 am Wärmeaustausch teil.

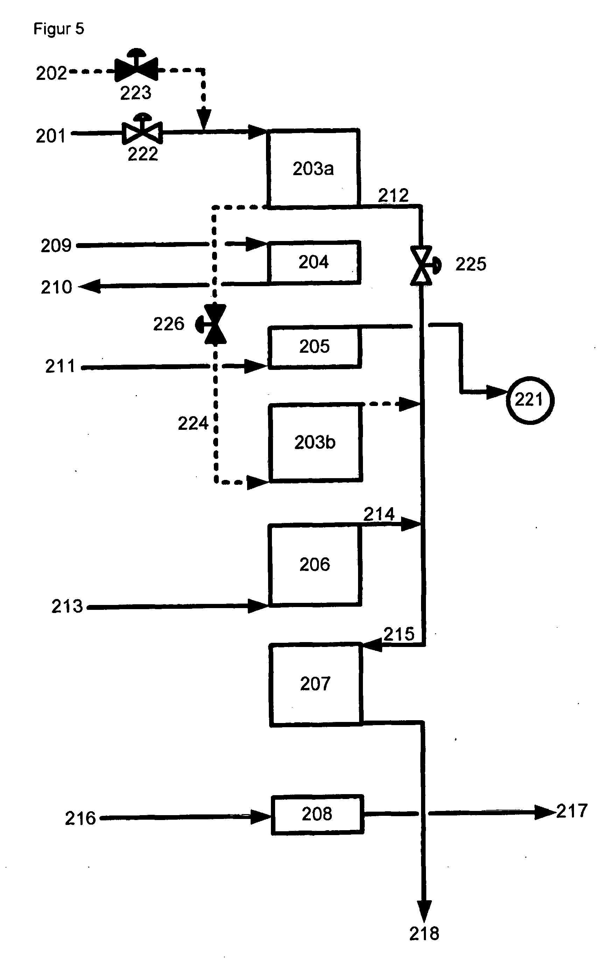

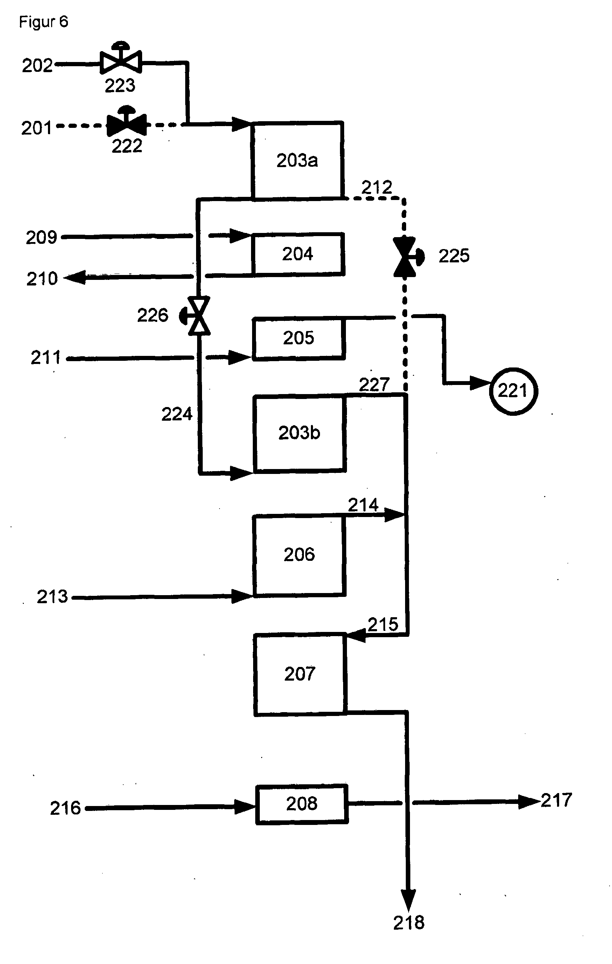

Die Figuren 5 und 6 zeigen eine alternative Ausgestaltung mit einer ähnlichen Anordnung der Wärmetauscher wie in der Ausgestaltung nach den Figuren 3 und 4.

Auch hier sind zwei Wärmetauscher 203a und 203b zur Vorwärmung und/oder Verdampfung des kohlenwasserstoffhaltigen Einsatzes vorgesehen, wobei sich der Wärmetauscher 203a am kälteren Ende der Konvektionszone und der Wärmetauscher 203b an einer Stelle mit höherer Rauchgastemperatur in der Konvektionszone befindet. Die Konvektionszone weist ebenfalls zwei Wärmetauscher 204 und 205 zur Vorwärmung und/oder Verdampfung von Kesselspeisewasser 209 und 211 auf. Analog zu den Figuren 3 und 4 wird das erwärmte Kesselspeisewasser 210 weiterverwendet bzw. als ein- oder zweiphasiges Gemisch zur Dampftrommel 221 geführt. Der Wärmetauscher 206 dient analog der Überhitzung von Verdünnungsdampf 213, der als überhitzter Dampf 214 dem kohlenwasserstoffhaltigen Einsatz zugemischt wird. Das Gemisch 215 aus kohlenwasserstoffhaltigem Einsatz und überhitztem Dampf 214 wird dem Wärmetauscher 207 zur weiteren Vorwärmung bzw. Überhitzung aufgegeben. Ebenso finden sich mehrere optionale Wärmetauscher im heißeren Bereich der Konvektionszone, wobei hier wieder der Wärmetauscher 208 beispielhaft dargestellt ist, der der Überhitzung von gesättigtem Hochdruckdampf 216 zu Hochdruckdampf 217 dient.

Ähnlich der Ausgestaltung in Fig. 3 wird der gasförmige kohlenwasserstoffhaltige Einsatz 201 dem Wärmetauscher 203a am kälteren Ende der Konvektionszone zur Vorwärmung aufgegeben. Das Regelventil 222 ist entsprechend in der Offenstellung das Ventil 223 in der Geschlossenstellung. Der vorgewärmte kohlenwasserstoffhaltige Einsatz 212 wird als Gemisch 215 mit überhitztem Verdünnungsdampf 214 dem Wärmetauscher 207 zur weiteren Vorwärmung bzw. Überhitzung aufgegeben. Dieses Gemisch wird über weitere optionale und nicht dargestellte Wärmetauscher direkt in die Strahlungszone 218 zur Spaltung geführt.

Der Wärmetauscher 203b im Bereich der höheren Rauchgastemperatur wird hier mittels eines Bypasses umgangen. Entsprechend ist Ventil 225 in der Offenstellung, während Ventil 226 in der Geschlossenstellung ist. Somit wird auch in dieser Ausgestaltung der Erfindung die Verfahrensführung in der Konvektionszone derart geführt, dass nur ein Bruchteil der für die Vorwärmung und/oder Verdampfung des kohlenwasserstoffhaltigen Einsatzes zur Verfügung stehenden Wärmeaustauschfläche genutzt wird. Bei gasförmigem kohlenwasserstoffhaltigen Einsatz 201 nimmt der gesamte Wärmetauscher 203b nicht am Wärmeaustausch mit dem Rauchgas teil.

Fig. 6 zeigt die Verfahrensführung dieser Ausgestaltung der Erfindung bei flüssigem kohlenwasserstoffhaltigen Einsatz 202. In diesem Fall ist entsprechend das Ventil 222 geschlossen und Ventil 233 geöffnet. auch hier wird der flüssige kohlenwasserstoffhaltige Einsatz 202 im Wärmetauscher 203a am kälteren Ende der Konvektionszone aufgegeben. Im Unterschied zur Verfahrensführung bei gasförmigem kohlenwasserstoffhaltigen Einsatz 201 wird jedoch hier der vorgewärmte kohlenwasserstoffhaltige Einsatz 212 in den Wärmetauscher 203b geführt. Das Ventil 226 ist entsprechend geöffnet, während Ventil 225 geschlossen ist. Im Wärmetauscher 203b, der an einer Stelle mit höherer Rauchgastemperatur positioniert ist, wird der kohlenwasserstoffhaltige Einsatz weiter erwärmt und/oder verdampft 227 und erst danach mit überhitztem Dampf 214 verdünnt. Somit werden bei flüssigem Kohlenwasserstoffhaltigen Einsatz 202 nahezu 100 % der Wärmeaustauschfläche der Wärmetauscher zur Vorwärmung und/oder Verdampfung des kohlenwasserstoffhaltigen Einsatzes genutzt. Somit ist sichergestellt, dass das Gemisch aus Verdünnungsdampf und kohlenwasserstoffhaltigem Einsatz unabhängig von Art und Aggregatzustand des Kohlenwasserstoffhaltigen Einsatzes unter verfahrenstechnisch optimierten Bedingungen (z.B. der gewünschten Eintrittstemperatur in die Strahlungszone) in die Spaltung 218 geführt und gleichzeitig ein hoher thermischer Gesamtwirkungsgrad des Spaltofens (d.h. niedrige Rauchgasaustrittstemperaturen am Austritt der Konvektionszone) erreicht wird.

## Patentansprüche

1. Verfahren zur Herstellung von Kohlenwasserstoffen mittels thermischer Spaltung eines kohlenwasserstoffhaltigen Einsatzes in einem Spaltofen,
• wobei der Spaltofen eine Strahlungszone und eine Konvektionszone aufweist,
• wobei die thermische Spaltung des kohlenwasserstoffhaltigen Einsatzes in der Strahlungszone erfolgt und
• das Rauchgas der Strahlungszone in der Konvektionszone als Wärmeträger zur Vorwärmung verschiedener Einsatzstoffe genutzt wird,
• der kohlenwasserstoffhaltige Einsatz über in der Konvektionszone angeordnete Wärmetauscher (3) vorgewärmt und/oder verdampft wird, und
• Kesselspeisewasser über mindestens einen in der Konvektionszone angeordneten Wärmetauscher (4, 5) vorgewärmt und/oder verdampft wird,
**dadurch gekennzeichnet, dass**
• unabhängig vom Aggregatzustand des kohlenwasserstoffhaltigen Einsatzes die Temperatur des Rauchgases bei Austritt aus der Konvektionszone in einem Bereich von 30°C variiert und kleiner als 150°C ist und die Verfahrensführung der Ströme in den Wärmetauschern in der Konvektionszone derart geregelt ist, dass
• bei gasförmigen kohlenwasserstoffhaltigen Einsatz nahezu 100% der gesamten Wärmeaustauschfläche aller Wärmetauscher in der Konvektionszone am Wärmeaustausch mit dem Rauchgas teilnehmen,
• während bei flüssigen kohlenwasserstoffhaltigen Einsatz nur ein Bruchteil von 100% der Wärmeaustauschfläche der Wärmetauscher in der Konvektionszone am Wärmeaustausch mit dem Rauchgas teilnehmen, die nicht der Vorwärmung und/oder Verdampfung des kohlenwasserstoffhaltigen Einsatzes dienen, und wobei bei flüssigem kohlenwasserstoffhaltigen Einsatz mindestens ein Wärmetauscher (4) zur Erwärmung und/oder Verdampfung von Kesselspeisewasser nicht von Kesselspeisewasser durchströmt wird, insbesondere überbrückt wird oder mittels Bypass-Regelung umgangen wird, welcher bei gasförmigen kohlenwasserstoffhaltigen Einsatz von Kesselspeisewasser durchströmt wird, und wobei der mindestens eine Wärmetauscher (4) mit zumindest einem weiteren, in der Konvektionszone angeordneten Wärmetauscher (5) in Serie strömungstechnisch verbindbar ist, wobei bei flüssigem kohlenwasserstoffhaltigen Einsatz Kesselspeisewasser an dem mindestens einen Wärmeübertrager (4) vorbeigeführt wird und lediglich den mindestens einen weiteren Wärmeübertrager (5) zur Erwärmung und/oder Verdampfung von Kesselspeisewasser durchströmt, und wobei bei einem gasförmigen kohlenwasserstoffhaltigen Einsatz zunächst der mindestens eine Wärmeübertrager (4) und sodann der mindestens eine weitere Wärmeübertrager (5) zur Erwärmung und/oder Verdampfung von Kesselspeisewasser von Kesselspeisewasser durchströmt wird,
• und wobei der Wärmetauscher (3) zur Vorwärmung und/oder Verdampfung des kohlenwasserstoffhaltigen Einsatzes am kälteren Ende der Konvektionszone angeordnet ist, und wobei die Wärmetauscher (4, 5) zur Erwärmung und/oder Verdampfung von Kesselspeisewasser in einem Bereich höherer Rauchgastemperatur angeordnet sind.

2. Verfahren nach Anspruch 1, **dadurch gekennzeichnet, dass** das Rauchgas bei Austritt aus der Konvektionszone eine Temperatur zwischen 80°C und 150°C, besonders bevorzugt eine Temperatur zwischen 80°C und 130°C, aufweist.

3. Verfahren nach einem der vorangegangenen Ansprüche, **dadurch gekennzeichnet, dass**, Verdünnungsdampf für die Spaltung über mindestens einen in der Konvektionszone angeordneten Wärmetauscher überhitzt wird, wobei dieser Wärmetauscher mittels einer Bypassregelung abhängig vom Aggregatzustand des kohlenwasserstoffhaltigen Einsatzes nicht oder mit geringerem Wirkungsgrad am Wärmeaustausch mit dem Rauchgas beteiligt ist.

4. Verfahren nach einem der vorhergehenden Ansprüche, **dadurch gekennzeichnet, dass** der kohlenwasserstoffhaltige Einsatz und/oder das Kesselspeisewasser einheitlich vorgewärmt und/oder verdampft wird.

## Claims

1. Process for preparing hydrocarbons by means of thermal cracking of a hydrocarbon-containing feed in a cracking furnace,
• wherein the cracking furnace has a radiation zone and a convection zone,
• the thermal cracking of the hydrocarbon-containing feed is effected in the radiation zone and
• the flue gas from the radiation zone is utilized in the convection zone as heat transfer medium for preheating various starting materials,
• the hydrocarbon-containing feed is preheated and/or vaporized by means of heat exchangers (3) arranged in the convection zone and
• boiler feed water is preheated and/or vaporized by means of at least one heat exchanger (4, 5) arranged in the convection zone,
**characterized in that**
• the temperature of the flue gas on exiting the convection zone varies, independently of the state of matter of the hydrocarbon-containing feed, in a range of 30°C and is less than 150°C and the streams in the heat exchangers in the convection zone are regulated in the process in such a way that
• in the case of a gaseous hydrocarbon-containing feed, virtually 100% of the total heat transfer area of all heat exchangers in the convection zone participates in heat exchange with the flue gas,
• while in the case of a liquid hydrocarbon-containing feed, only a fraction of 100% of the heat transfer area of the heat exchangers in the convection zone which do not serve for preheating and/or vaporizing the hydrocarbon-comprising feed participates in heat exchange with the flue gas, and in the case of a liquid hydrocarbon-containing feed boiler feed water does not flow through at least one heat exchanger (4) for heating and/or vaporizing boiler feed water through which boiler feed water flows in the case of a gaseous hydrocarbon-containing feed, in particular is bridged or bypassed by means of bypass regulation, and the at least one heat exchanger (4) can be connected hydrodynamically in series with at least one further heat exchanger (5) arranged in the convection zone, with in the case of a liquid hydrocarbon-containing feed, boiler feed water being conveyed past the at least one heat exchanger (4) and merely flowing through the at least one further heat exchanger (5) for heating and/or vaporizing boiler feed water and in the case of a gaseous hydrocarbon-containing feed, boiler feed water flowing firstly through the at least one heat exchanger (4) and then through the at least one further heat exchanger (5) for heating and/or vaporizing boiler feed water,
• and the heat exchanger (3) for preheating and/or vaporizing the hydrocarbon-containing feed is arranged at the relatively cold end of the convection zone and wherein the heat exchangers (4, 5) for heating and/or vaporizing boiler feed water are arranged in a region of relatively high flue gas temperature.

2. Process according to Claim 1, **characterized in that** the flue gas has a temperature in the range from 80°C to 150°C, particularly preferably a temperature in the range from 80°C to 130°C, on exiting from the convection zone.

3. Process according to either of the preceding claims, **characterized in that** diluent steam for cracking is superheated by means of at least one heat exchanger arranged in the convection zone, where this heat exchanger does not participate, or participates with reduced efficiency, in heat exchange with the flue gas as a result of bypass regulation, depending on the state of matter of the hydrocarbon-containing feed.

4. Process according to any of the preceding claims, **characterized in that** the hydrocarbon-containing feed and/or the boiler feed water is uniformly preheated and/or vaporized.

## Revendications

1. Procédé pour la production d'hydrocarbures par craquage thermique d'une charge contenant des hydrocarbures dans un four de craquage,
• dans lequel le four de craquage présente une zone de rayonnement et une zone de convection,
• dans lequel on opère le craquage thermique de la charge contenant des hydrocarbures dans la zone de rayonnement et
• on utilise les gaz de fumées de la zone de rayonnement dans la zone de convection comme porteurs de chaleur pour le préchauffage de différentes matières de la charge,
• on préchauffe et/ou on vaporise la charge contenant des hydrocarbures au moyen d'échangeurs de chaleur (3) disposés dans la zone de convection, et
• on préchauffe et/ou on vaporise de l'eau d'alimentation de chaudières au moyen d'au moins un échangeur de chaleur (4, 5) disposé dans la zone de convection,
**caractérisé en ce que**
• la température des gaz de fumées à la sortie de la zone de convection varie, indépendamment de l'état d'agrégation de la charge contenant des hydrocarbures, dans une plage de 30°C et est inférieure à 150°C et la conduite de circulation des courants dans les échangeurs de chaleur dans la zone de convection est régulée d'une telle manière que
• dans le cas d'une charge contenant des hydrocarbures sous forme gazeuse, pratiquement 100 % de la surface totale d'échange de chaleur de tous les échangeurs de chaleur dans la zone de convection participent à l'échange de chaleur avec les gaz de fumées,
• tandis que, dans le cas d'une charge contenant des hydrocarbures sous forme liquide, seule une fraction de 100 % de la surface d'échange de chaleur des échangeurs de chaleur dans la zone de convection qui ne servent pas pour le préchauffage et/ou la vaporisation de la charge contenant des hydrocarbures, participe à l'échange de chaleur avec les gaz de fumées, et dans lequel, dans le cas d'une charge contenant des hydrocarbures sous forme liquide, au moins un échangeur de chaleur (4) pour le préchauffage et/ou la vaporisation de l'eau d'alimentation de chaudières n'est pas parcouru par l'eau d'alimentation de chaudières, en particulier est évité ou contourné au moyen d'une régulation de dérivation, lequel est parcouru par l'eau d'alimentation de chaudières dans le cas d'une charge contenant des hydrocarbures sous forme gazeuse, et dans lequel l'au moins un échangeur de chaleur (4) peut être relié en écoulement en série à au moins un autre échangeur de chaleur (5) disposé dans la zone de convection, dans lequel, dans le cas d'une charge contenant des hydrocarbures sous forme liquide, l'eau d'alimentation de chaudières passe à côte de l'au moins un échangeur de chaleur (4) et parcourt uniquement l'au moins un autre échangeur de chaleur (5) pour le chauffage et/ou la vaporisation d'eau d'alimentation de chaudières, et dans lequel, dans le cas d'une charge contenant des hydrocarbures sous forme gazeuse, d'abord l'au moins un échangeur de chaleur (4) et ensuite l'au moins un autre échangeur de chaleur (5) pour le chauffage et/ou la vaporisation d'eau d'alimentation de chaudières sont parcourus par l'eau d'alimentation de chaudières,
• et dans lequel l'échangeur de chaleur (3) pour le préchauffage et/ou la vaporisation de la charge contenant des hydrocarbures est disposé à l'extrémité plus froide de la zone de convection, et dans lequel les échangeurs de chaleur (4, 5) pour le chauffage et/ou la vaporisation d'eau d'alimentation de chaudières sont disposés dans une zone de plus haute température des gaz de fumées.

2. Procédé selon la revendication 1, **caractérisé en ce que** les gaz de fumées présentent à la sortie de la zone de convection une température comprise entre 80°C et 150°C, notamment de préférence une température comprise entre 80°C et 130°C.

3. Procédé selon l'une quelconque des revendications précédentes, **caractérisé en ce que** l'on surchauffe de la vapeur de dilution pour le craquage au moyen d'au moins un échangeur de chaleur disposé dans la zone de convection, dans lequel cet échangeur de chaleur ne participe pas ou participe avec un plus faible rendement à l'échange de chaleur avec les gaz de fumées, au moyen d'une régulation de dérivation en fonction de l'état d'agrégation de la charge contenant des hydrocarbures.

4. Procédé selon l'une quelconque des revendications précédentes, **caractérisé en ce que** la charge contenant des hydrocarbures et/ou l'eau d'alimentation de chaudières sont uniformément préchauffées et/ou vaporisées.
